# EUROPEAN PATENT APPLICATION

(11) **EP 4 697 664 A1**
(43) Date of publication of application: **18.02.2026**
(21) Application number: 24870632.7
(22) Date of filing: 23.09.2024
(51) Int. Cl.: H04L 41/0654

(54) **DAISY CHAIN BREAKPOINT RECOVERY METHOD, APPARATUS AND DEVICE, AND STORAGE MEDIUM**

(30) Priority: 25.09.2023 CN 202311249213
(71) Applicant: Zhaoqing Xiaopeng New Energy Investment Co., Ltd. Guangzhou Branch, Guangzhou, Guangdong 510000 (CN); Guangzhou Xiaopeng Motors Technology Co., Ltd., Guangzhou, Guangdong 510000 (CN)
(72) Inventor: ZHANG, Ming, Guangzhou, Guangdong 510000 (CN); ZHU, Hongying, Guangzhou, Guangdong 510000 (CN); KIM, Jong Chul, Guangzhou, Guangdong 510000 (CN); HU, Mianzhou, Guangzhou, Guangdong 510000 (CN); YAN, Xue, Guangzhou, Guangdong 510000 (CN)
(74) Representative: Ran, Handong
(86) International application number: PCT/CN2024/120248
(87) International publication number: WO 2025/067088

(57) **Abstract**

A daisy chain breakpoint recovery method, apparatus and device, and a storage medium. The method comprises: acquiring a connection number of front-end sampling chips in a daisy chain, and on the basis of the connection number, determining whether there is a breakpoint in the daisy chain; when there is a breakpoint in the daisy chain, limiting a travelling power on the basis of sampled data before the breakpoint; reconnecting the front-end sampling chips in the daisy chain, such that the daisy chain is restored to normal; and after the daisy chain is restored to normal, acquiring overall sampled data, and restoring the travelling power on the basis of the overall sampled data.

## Description

### CROSS-REFERENCE TO RELATED APPLICATIONS

The present application claims priority to and the benefit of Patent Application No. 202311249213.3, filed with the China National Intellectual Property Administration on September 25, 2023, which is incorporated herein by reference in its entirety.

### TECHNICAL FIELD

The present application relates to the field of daisy chain communication technology, and in particular, to a daisy chain breakpoint recovery method, apparatus, and device, and a storage medium.

### BACKGROUND

In the field of new energy electric vehicles, a battery management system (BMS) of a battery pack typically employs daisy chain communication technology to monitor parameters such as cell temperature, voltage, and current, and then through corresponding algorithms, ensures battery health and controls safe high-voltage output. However, the in-vehicle environment is highly complex, which may introduce interference to the daisy chain communication of the BMS (e.g., strong EMC interference), leading to daisy chain failure. In this case, the daisy chain cannot form a serial loop, causing communication failure of the daisy chain. This makes it impossible to acquire cell data to identify breakpoints, posing safety risks to the entire vehicle and increasing the difficulty of battery pack maintenance.

The above description is provided solely to assist in understanding the technical solutions of the present application and does not constitute an admission that such description forms part of the existing technologies.

### SUMMARY OF THE INVENTION

A primary objective of the present application is to provide a daisy chain breakpoint recovery method, apparatus, device, and a storage medium, to solve the technical problem in existing technologies that a daisy chain cannot form a serial loop under strong interference, making it impossible to acquire cell data to identify breakpoints, thereby increasing safety risks.

To achieve the above objective, the present application provides a daisy chain breakpoint recovery method. The method includes the following steps:
acquiring a connection number of front-end sampling chips in a daisy chain, and determining whether a breakpoint exists in the daisy chain based on the connection number;
when a breakpoint exists in the daisy chain, limiting a driving power based on sampled data before the breakpoint;
reconnecting the front-end sampling chips in the daisy chain to restore the daisy chain to normal; and
after the daisy chain is restored to normal, acquiring overall sampled data, and resuming the driving power based on the overall sampled data.

Optionally, the step of reconnecting the front-end sampling chips in the daisy chain to restore the daisy chain to normal includes:
acquiring a communication connection time of the front-end sampling chips, and when the communication connection time is greater than or equal to a preset holding time, initializing a reconnection count and updating a chip reconnection number to a chip number of the front-end sampling chips;
reconnecting the front-end sampling chips based on the chip reconnection number, and updating the reconnection count;
when the front-end sampling chips fail to be reconnected, determining that the daisy chain enters a failure state;
when the reconnection count is less than or equal to a reconnection count threshold, returning to the step of reconnecting the front-end sampling chips based on the chip reconnection number; and
when the reconnection count is greater than the reconnection count threshold, updating the chip reconnection number based on a preset decrementing strategy, initializing the reconnection count, and returning to the step of reconnecting the front-end sampling chips based on the chip reconnection number.

Optionally, the step of reconnecting the front-end sampling chips based on the chip reconnection number includes:
determining target front-end sampling chips from the front-end sampling chips based on the chip reconnection number;
reconnecting the target front-end sampling chips;
acquiring a communication verification state of the target front-end sampling chip, and updating a verification error count based on the communication verification state;
when the verification error count is less than or equal to a preset verification threshold, determining that the front-end sampling chips are successfully reconnected; and
when the verification error count is greater than the preset verification threshold, determining that the front-end sampling chips fail to be reconnected.

Optionally, after the step of reconnecting the front-end sampling chips based on the chip reconnection number, the method further includes:
when the front-end sampling chips are successfully reconnected, determining a reconnection success number based on the chip reconnection number;
when the reconnection success number is equal to the chip number, determining that the daisy chain is restored to normal; and
when the reconnection success number is less than the chip number, returning to the step of acquiring a connection number of front-end sampling chips in a daisy chain.

Optionally, after the step of acquiring a communication connection time of the front-end sampling chips, the method further includes:
when the communication connection time is less than the preset holding time, determining that the daisy chain enters an error state;
determining the chip reconnection number based on the connection number; and
returning to the step of reconnecting the front-end sampling chips based on the chip reconnection number.

Optionally, the step of determining whether a breakpoint exists in the daisy chain based on the connection number includes:
when the connection number is not equal to the chip number of the front-end sampling chips, determining whether a breakpoint exists in the daisy chain; and
when the connection number is equal to the chip number, acquiring a communication connection time, and when the communication connection time is greater than a preset stabilization time, determining that no breakpoint exists in the daisy chain, initializing the reconnection count, updating the chip reconnection number to the chip number, and returning to the step of acquiring a connection number of front-end sampling chips in the daisy chain.

Optionally, the daisy chain breakpoint recovery method further includes:
when a breakpoint exists in the daisy chain, determining a position of the breakpoint in the daisy chain based on the connection number.

In addition, to achieve the foregoing objective, the present application further provides a daisy chain breakpoint recovery apparatus. The daisy chain breakpoint recovery apparatus includes:
a breakpoint identification module, configured to acquire a connection number of front-end sampling chips in a daisy chain, and determine whether a breakpoint exists in the daisy chain based on the connection number;
a power limitation module, configured to: when a breakpoint exists in the daisy chain, limit a driving power based on sampled data before the breakpoint;
a breakpoint recovery module, configured to reconnect the front-end sampling chips in the daisy chain to restore the daisy chain to normal; and
a power recovery module, configured to, after the daisy chain is restored to normal, acquire overall sampled data and resume the driving power based on the overall sampled data.

In addition, to achieve the foregoing objective, the present application further provides a daisy chain breakpoint recovery device. The daisy chain breakpoint recovery device includes: a memory, a processor, and a daisy chain breakpoint recovery program stored in the memory and executable on the processor, and the daisy chain breakpoint recovery program is configured to implement the steps of the daisy chain breakpoint recovery method described above.

In addition, to achieve the foregoing objective, the present application further provides a storage medium, having stored thereon a daisy chain breakpoint recovery program which, when executed by a processor, implements the steps of the daisy chain breakpoint recovery method described above.

In the present application, the connection number of front-end sampling chips in a daisy chain is acquired, and whether a breakpoint exists in the daisy chain is determined based on the connection number. When a breakpoint exists in the daisy chain, the driving power is limited based on sampled data before the breakpoint, the front-end sampling chips in the daisy chain are reconnected to restore the daisy chain to normal. After the daisy chain is restored to normal, overall sampled data is obtained and the driving power is resumed based on the overall sampled data. Since, under strong interference, the daisy chain cannot form a serial loop, cell data cannot be obtained to identify breakpoints, increasing safety risks. When daisy chain interference or disconnection occurs during vehicle operation, the present application enables the position of a breakpoint to be accurately identified, thereby reducing maintenance difficulty. Moreover, data prior to the breakpoint is acquired to limit the driving power of the vehicle, so that the vehicle does not need to stop traveling at a high voltage, thereby ensuring driving safety and mitigating safety risks. In addition, the daisy chain is restored through a rapid reconnection mechanism, and complete data is acquired after restoration, enabling the vehicle to automatically resume normal operation.

### BRIEF DESCRIPTION OF THE DRAWINGS

FIG. 1 is a schematic structural diagram of a daisy chain breakpoint recovery device in a hardware operation environment involved in the solution according to an embodiment of the present application;
FIG. 2 is a schematic flowchart of a first embodiment of a daisy chain breakpoint recovery method according to the present application;
FIG. 3 is a schematic diagram of normal daisy chain communication of the first embodiment of the daisy chain breakpoint recovery method according to the present application;
FIG. 4 is a schematic diagram of state switching of a daisy chain of the first embodiment of the daisy chain breakpoint recovery method according to the present application;
FIG. 5 is a schematic diagram of a breakpoint of a daisy chain of the first embodiment of the daisy chain breakpoint recovery method according to the present application;
FIG. 6 is a schematic diagram of a loop inside chips of the first embodiment of the daisy chain breakpoint recovery method according to the present application;
FIG. 7 is a schematic flowchart of a second embodiment of a daisy chain breakpoint recovery method according to the present application;
FIG. 8 is a schematic diagram of communication verification of the first embodiment of the daisy chain breakpoint recovery method according to the present application;
FIG. 9 is a schematic flowchart of a third embodiment of a daisy chain breakpoint recovery method according to the present application;
FIG. 10 is an overall schematic flowchart of a first embodiment of a daisy chain breakpoint recovery method according to the present application; and
FIG. 11 is a structural block diagram of the first embodiment of the daisy chain breakpoint recovery apparatus according to the present application.

The realization of the objective, functional features, and advantages of the present application are further described with reference to the accompanying drawings in conjunction with the embodiments.

### DETAILED DESCRIPTION

It should be understood that the specific embodiments described herein are merely used to describe the present application rather than limit the present application.

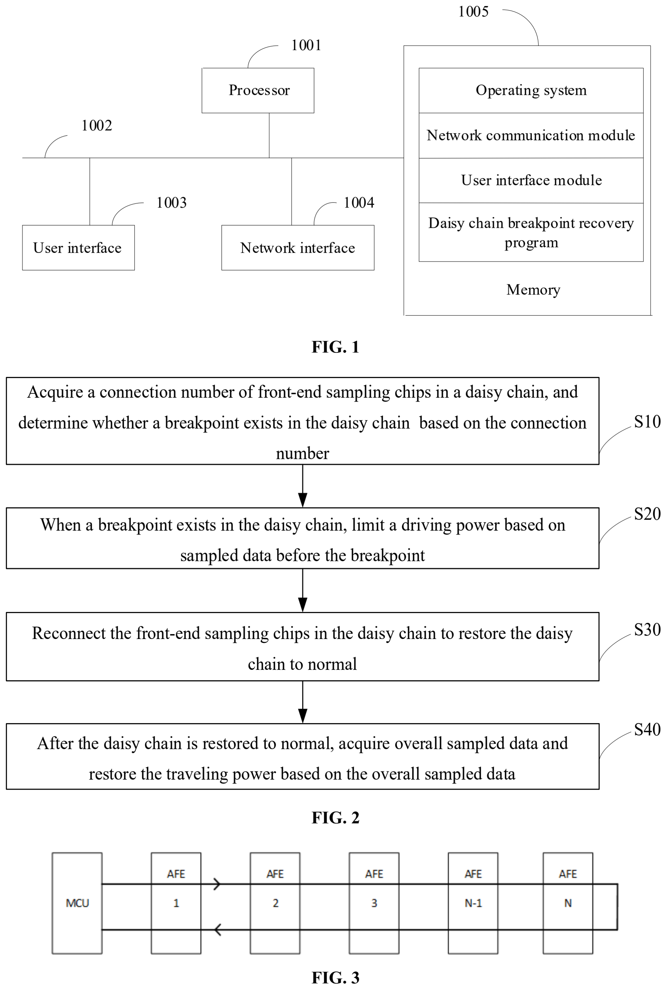

FIG. 1 is a schematic structural diagram of a daisy chain breakpoint recovery device in a hardware operation environment involved in the solution according to an embodiment of the present application.

As shown in FIG. 1, the daisy chain breakpoint recovery device can include a processor 1001, for example, a central processing unit (CPU), a communication bus 1002, a user interface 1003, a network interface 1004, and a memory 1005. The communication bus 1002 is configured to implement connection and communication between these components. The user interface 1003 may include a display and an input unit, for example, a keyboard. Optionally, the user interface 1003 may further include a standard wired interface or wireless interface. The network interface 1004 may optionally include a standard wired interface or wireless interface (for example, a wireless fidelity (Wi-Fi) interface). The memory 1005 can be a high-speed random access memory (RAM), or can be a stable non-volatile memory (NVM), for example, a disk memory. The memory 1005 may optionally be a storage apparatus independent of the foregoing processor 1001.

It can be understood by those skilled in the art that the structure shown in FIG. 1 does not constitute a limitation to the daisy chain breakpoint recovery device, and may include more or fewer components than those shown, or some components can be combined, or different component arrangements are used.

As shown in FIG. 1, the memory 1005 used as a storage medium may include an operating system, a network communication module, a user interface module, and a daisy chain breakpoint recovery program.

In the daisy chain breakpoint recovery device shown in FIG. 1, the network interface 1004 is mainly configured to perform data communication with a network server. The user interface 1003 is mainly configured to exchange data with a user. The processor 1001 and the memory 1005 of the daisy chain breakpoint recovery device of the present application can be disposed in the daisy chain breakpoint recovery device. The daisy chain breakpoint recovery device invokes the daisy chain breakpoint recovery program stored in the memory 1005 through the processor 1001, and performs the daisy chain breakpoint recovery method provided in the embodiments of the present application.

Embodiments of the present application provide a daisy chain breakpoint recovery method. FIG. 2 is a schematic flowchart of a first embodiment of a daisy chain breakpoint recovery method according to the present application.

In this embodiment, the daisy chain breakpoint recovery method includes the following steps.

Step S10: Acquire a connection number of front-end sampling chips in a daisy chain, and determine, based on the connection number, whether a breakpoint exists in the daisy chain.

It should be noted that the execution body in this embodiment is a microcontroller unit (MCU) in a vehicle. As shown in FIG. 3, N front-end sampling (Analog Font End, AFE) chips communicate in serial to form a loop. The loop is communicatively connected to the MCU to form a daisy chain. A daisy chain breakpoint recovery program is provided in the MCU. The daisy chain breakpoint recovery program, when executed, is capable of detecting breakpoints in the daisy chain and performing rapid recovery.

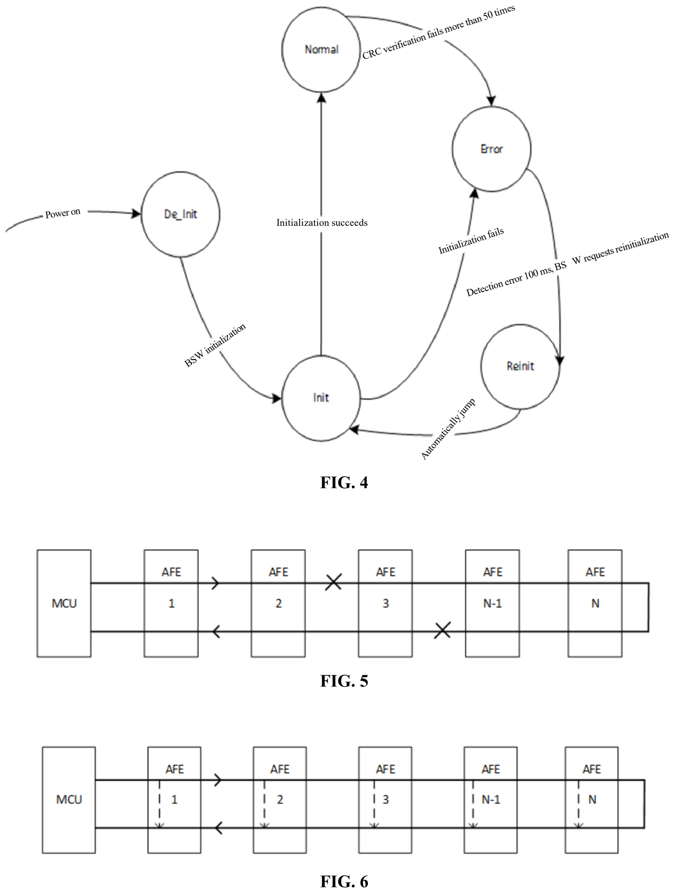

It can be understood that a daisy chain operates in five states, namely: initialization (Init), re-initialization (Reinit), de-initialization (Deinit), normal (Normal), and error (Error). The transitions between these states are illustrated in FIG. 4. Generally, the daisy chain is usually in the normal state, and it enters the error state if a communication error occurs. After entering the error state, the daisy chain enters the re-initialization state if re-initialization is requested. After entering the re-initialization state, the daisy chain unconditionally transitions to the initialization state. Upon entering the initialization state, the daisy chain enters the normal state if it establishes successful communication connection, while enters the error state if the daisy chain communication connection fails. When the daisy chain is in the normal state, at least one front-end sampling chip must be able to communicate with the MCU. Therefore, the daisy chain is in the normal state as long as one front-end sampling chip in the daisy chain can establish communication with the MCU.

Further, the step of acquiring the connection number of front-end sampling chips in the daisy chain includes: receiving sampled data from the front-end sampling chips in the daisy chain; determining communication-capable front-end sampling chips from the front-end sampling chips based on the sampled data; and determining the connection number based on the number of the communication-capable front-end sampling chips.

It should be understood that, referring to FIG. 3, when the daisy chain performs normal communication (no breakpoint exists), the front-end sampling chips can return sampled data to the MCU normally. In such a case, the sampled data of the front-end sampling chips received by the MCU is data under normal daisy chain communication. As shown in FIG. 5, if the daisy chain experiences a disconnection or strong interference, a breakpoint occurs in the daisy chain, the daisy chain cannot form a serial loop, and daisy chain communication fails, making it impossible to directly acquire cell data to identify the breakpoint. As shown in FIG. 6, MAX17823 chips are used as the front-end sampling chips in this embodiment. The MAX17823 chips inherently support a daisy chain loopback function. By enabling the internal loop of the chips, the sampled data before the chips are disconnected can be returned to the MCU. In such a case, the sampled data of the front-end sampling chips received by the MCU is data when a breakpoint occurs in the daisy chain, which can be used to determine the position of the breakpoint to provide reference information for battery pack maintenance, thereby facilitating subsequent battery pack maintenance and reducing the difficulty of repairing the battery pack.

It should be noted that the MCU can determine, based on received sampled data, chips that are capable of communicating with the MCU, i.e., communication-capable front-end sampling chips. The number of such communication-capable front-end sampling chips represents the number of the front-end sampling chips that are currently communicatively connected to the MCU (the connection number).

Further, the step of determining whether a breakpoint exists in the daisy chain based on the connection number includes: when the connection number is not equal to the chip number of the front-end sampling chips, determining whether a breakpoint exists in the daisy chain; and when the connection number is equal to the chip number, acquiring a communication connection time, and when the communication connection time is greater than a preset stabilization time, determining that no breakpoint exists in the daisy chain, initializing the reconnection count, updating the chip reconnection number to the chip number, and returning to the step of acquiring a connection number of front-end sampling chips in the daisy chain.

It can be understood that the chip number refers to the number of front-end sampling chips that can normally communicate with the MCU when no breakpoint exists in the daisy chain. For example, the chip number may be 10, depending on the actual situation. If the connection number is less than the chip number of the front-end sampling chips, it indicates that the MCU is not connected to all front-end sampling chips in the daisy chain. In this case, a breakpoint typically exists in the daisy chain. If the connection number is equal to the chip number of the front-end sampling chips and the communication connection is stable, it indicates that the MCU is connected to all front-end sampling chips in the daisy chain. In such a case, usually no breakpoint exists in the daisy chain and the MCU can communicate normally with all front-end sampling chips.

It should be understood that the communication connection time refers to the duration during which the front-end sampling chips can maintain communication with the MCU. The communication connection time starts counting when the daisy chain enters the normal state. When the daisy chain is in the error state, the communication connection time is typically 0. The preset stabilization time is a preset stabilization time threshold, e.g., 30 s, which may be set according to actual requirements and is not limited in this embodiment. If the duration of the communication connection between the front-end sampling chips and the MCU exceeds the stabilization time threshold, it is determined that the daisy chain is in a steady state and no breakpoint exists in the daisy chain. The reconnection count refers to the number of times of reconnecting the chips. The chip reconnection number refers to the number of chips attempted to be reconnected during the reconnection process. Both the reconnection count and the chip reconnection number are relevant parameters involved in the reconnection of the daisy chain. When the daisy chain is in a steady state, the reconnection count and the chip reconnection number are reset to their initial values. The initial value of the reconnection count is 0, and the initial value of the chip reconnection number is the chip number. The connection number of the front-end sampling chips is then rechecked.

In a specific implementation, if the number of chips connected to the MCU in the daisy chain is equal to the chip number and normal communication is maintained for longer than the stabilization time threshold, it can be determined that the daisy chain is in a steady state, and no breakpoint exists. In this case, the reconnection count is reset to zero, and the chip reconnection number is set to the chip number. If the number of the front-end sampling chips connected to the MCU in the daisy chain is less than the chip number, a breakpoint exists in the daisy chain.

Further, the daisy chain breakpoint recovery method further includes: when a breakpoint exists in the daisy chain, determining the position of the breakpoint in the daisy chain based on the connection number.

It should be noted that when the connection number is less than the chip number of front-end sampling chips, the position of a breakpoint, i.e., the breakpoint position, can be determined based on the current connection number. The breakpoint position is usually behind the last front-end sampling chip that can communicate with the MCU. If the current connection number is m, the last front-end sampling chip that can communicate with the MCU is the m^{th} front-end sampling chip. In this case, the breakpoint position is located behind the m^{th} front-end sampling chip. Since the (m+1)^{th} front-end sampling chip cannot communicate with the MCU, it can be determined that at least one breakpoint position exists between the m^{th} front-end sampling chip and the (m+1)^{th} front-end sampling chip, where 0 < m ≤ N - 1, and N is the chip number. If m = 0, the breakpoint position is located in front of the first front-end sampling chip, i.e., between the first front-end sampling chip and the MCU.

In a specific implementation, the position of the breakpoint is determined based on the connection number of the front-end sampling chips. When maintenance is required, the breakpoint can be quickly identified, thereby reducing the maintenance difficulty while accelerating maintenance progress.

Step S20: When a breakpoint exists in the daisy chain, limit a driving power based on sampled data before the breakpoint.

It can be understood that the sampled data before the breakpoint refers to data that front-end sampling chips located before the breakpoint in the daisy chain can return to the MCU. The driving power refers to the power used for vehicle driving.

In a specific implementation, when a breakpoint appears in the daisy chain, the sampled data before the breakpoint can be used to limit the driving power of the vehicle in this embodiment, so that the vehicle can travel with a limited power, and does not need to stop driving at a high voltage, thereby ensuring driving safety and mitigating safety risks.

Step S30: Reconnect the front-end sampling chips in the daisy chain to restore the daisy chain to normal.

It should be understood that the recovery of the daisy chain to normal generally refers to the condition in which all the front-end sampling chips can normally communicate with the MCU, so that all sampled data can subsequently be acquired. Therefore, if the daisy chain is restored to normal, it is in the normal operating state. However, since the normal state of the daisy chain only requires that at least one chip communicates with the MCU, the daisy chain being in the normal operating state does not necessarily mean that the daisy chain has necessarily restored to normal.

It should be noted that when reconnecting the front-end sampling chips in the daisy chain, the chip reconnection number initially attempted in this embodiment is usually the chip number. If the reconnection fails, the chip reconnection number is reduced and reconnection is attempted again. For example, it is assumed that the chip number is 10. The method first attempts to connect all the ten front-end sampling chips. If connection fails, it then attempts to connect nine front-end sampling chips. If connection still fails, the chip reconnection number is further reduced. If the initial reconnection is successful, it is generally determined that the daisy chain has restored to normal. If connection succeeds after using a new chip reconnection number of chips, the relevant reconnection parameters are initialized to start a new round of reconnection until all the front-end sampling chips in the daisy chain can normally communicate with the MCU and the daisy chain recovers to normal.

It can be understood that the reconnection of the front-end sampled chips in the daisy chain is initiated by the MCU.

Step S40: After the daisy chain is restored to normal, acquire overall sampled data, and resume the driving power based on the overall sampled data.

It should be understood that the overall sampled data refers to the sampled data from all front-end sampling chips. After the daisy chain is restored to normal, all sampled data can be acquired, allowing the vehicle to resume normal driving.

It should be noted that when the daisy chain is completely disconnected, data before disconnection can still be acquired in this embodiment to ensure that the vehicle can operate with limited power, and the position of the disconnection can be identified to facilitate battery pack maintenance. When the daisy chain is intermittently disconnected or unstable, the daisy chain can be restored to normal through rapid reconnection allowing all data to be obtained, so that the robustness of the daisy chain can be enhanced.

In the embodiment, the connection number of the front-end sampling chips in the daisy chain is obtained. Based on the connection number, it is determined whether a breakpoint exists in the daisy chain. When a breakpoint exists in the daisy chain, the driving power is limited based on sampled data before the breakpoint; and the front-end sampling chips in the daisy chain are reconnected to restore the daisy chain to normal. After the daisy chain has restored to normal, the overall sampled data is obtained, and the driving power is resumed based on the overall sampled data. Under strong interference, a daisy chain may fail to form a serial loop, making it impossible to acquire cell data to identify breakpoints, thereby increasing safety risks. In this embodiment, when interference or disconnection in the daisy chain occurs during vehicle operation, the position of a breakpoint can be accurately determined, reducing maintenance difficulty. Moreover, by acquiring the data prior to the breakpoint, the vehicle can operate with limited power, without needing to stop under high voltage, thereby ensuring driving safety and mitigating safety risks. In addition, the daisy chain can be restored through the rapid reconnection mechanism, and complete data is acquired after restoration, allowing the vehicle to automatically resume normal operation.

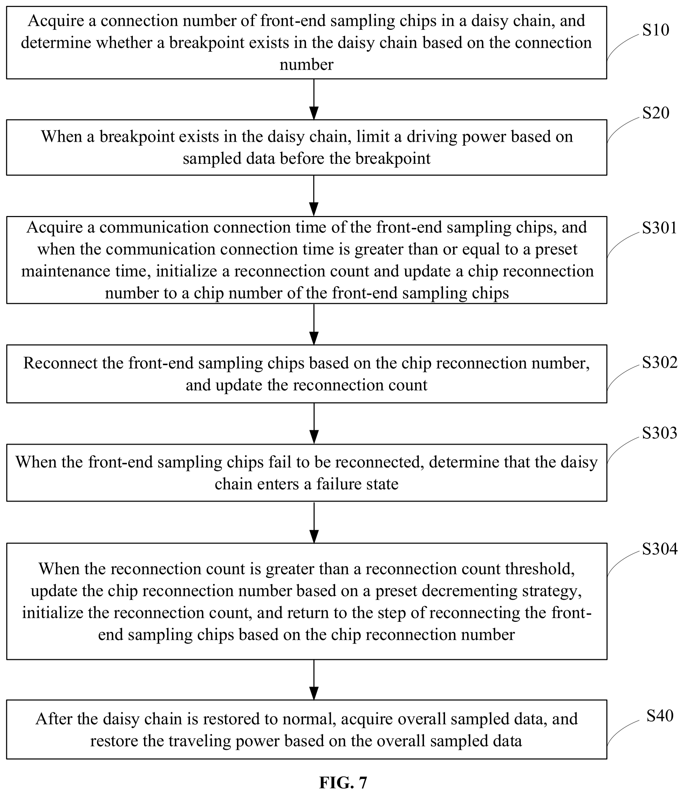

FIG. 7 is a schematic flowchart of a second embodiment of a daisy chain breakpoint recovery method according to the present application.

Based on the foregoing embodiment, Step S30 includes:
Step S301: Acquire a communication connection time of the front-end sampling chips, and when the communication connection time is greater than or equal to a preset holding time, initialize a reconnection count and update a chip reconnection number to the chip number of the front-end sampling chips.

It should be noted that the communication connection time refers to the duration during which the front-end sampling chips can maintain communication with the MCU. The preset holding time is a preset connection maintenance threshold, for example, 15 s, which can be set according to actual requirements. This is not intended to be limiting in this embodiment. The reconnection count refers to the number of times of reconnecting the chips. The chip reconnection number refers to the number of chips attempted to be reconnected during the reconnection process. Both the reconnection count and the chip reconnection number are relevant parameters involved in the reconnection of the daisy chain. When the communication connection time is greater than or equal to the preset holding time, the reconnection count and the chip reconnection number need to be reset to their initial values. The initial value of the reconnection count is 0, and the initial value of the chip reconnection number is the chip number. Therefore, the reconnection count is reset to zero, and the chip number is used as the initial chip reconnection number for performing the reconnection in Step S302.

Step S302: Reconnect the front-end sampling chips based on the chip reconnection number.

Further, Step S302 includes: determining target front-end sampling chips from the front-end sampling chips based on the chip reconnection number; reconnecting the target front-end sampling chips; acquiring a communication verification state of the target front-end sampling chips, and updating a verification error count based on the communication verification state; when the verification error count is less than or equal to a preset verification threshold, determining that the front-end sampling chips are successfully reconnected; and when the verification error count is greater than the preset verification threshold, determining that the front-end sampling chips fail to be reconnected.

It can be understood that the target front-end sampling chips are those in the front-end sampling chips to be attempted for reconnection. If there are N front-end sampling chips and the current chip reconnection number is k (1 ≤ k ≤ N), the target front-end sampling chips are the first k front-end sampling chips in the N front-end sampling chips.

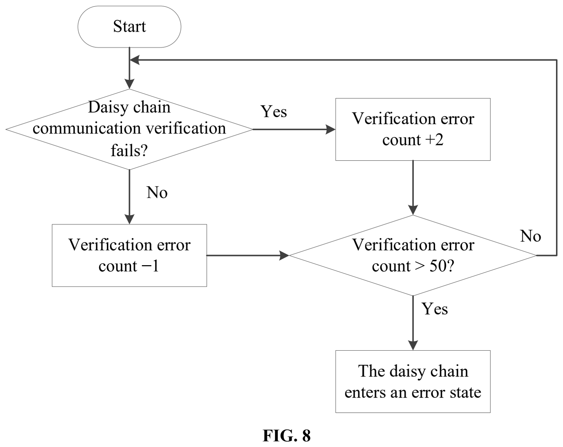

It should be understood that whether the MCU can normally communicate with the front-end sampling chips is generally determined through verification. A cyclic redundancy check (CRC) verification is used in this embodiment. The communication verification state refers to the result of the CRC verification during communication, which includes two states: verification success and verification error. The verification error count refers to the number of verification errors. The verification error count is usually accumulative. As shown in FIG. 8, if the communication verification state is verification success, the verification error count decreases by 1. If the communication verification state is verification error, the verification error count increases by 2. Other calculation methods may also be used. This is not intended to be limiting in this embodiment. The preset verification threshold is a preset error count threshold, for example, 50 times, and can be flexibly adjusted according to actual conditions. This is not intended to be limiting in this embodiment. Within a preset time range, the verification error count is monitored. If the verification error count exceeds the preset verification threshold, it is determined that there is a communication problem and the reconnection fails, causing the daisy chain to enter a failure state. If the verification error count does not exceed the preset verification threshold, it is determined that communication is normal, the reconnection is successful, and the daisy chain is still in the normal operating state. The preset time range can be flexibly adjusted according to actual requirements. This is not intended to be limiting in this embodiment. The CRC verification manner is applicable to the communication process between the MCU and any front-end sampling chip in this embodiment.

In a specific implementation, the verification state of communication between the MCU communicates and the target front-end sampling chips is determined through CRC verification. When the verification error count exceeds the preset verification threshold, it is determined that the reconnection fails.

Step S303: When the front-end sampling chips fail to be reconnected, determine that the daisy chain enters a failure state.

It should be noted that when reconnection fails, the daisy chain enters the failure operating state.

Step S304: When the reconnection count is greater than a reconnection count threshold, update the chip reconnection number based on a preset decrementing strategy, initialize the reconnection count, and return to the step of reconnecting the front-end sampling chips based on the chip reconnection number.

Further, when the reconnection count is less than or equal to the reconnection count threshold, the process returns to the step of reconnecting the front-end sampling chips based on the chip reconnection number.

It can be understood that the reconnection count threshold is a preset value indicating the number of reconnection attempts allowed for each chip reconnection number. The reconnection count is usually set to a value greater than 2, for example, 5, and can be set according to actual requirements. This is not intended to be limiting in this embodiment. During reconnection, multiple connection attempts can be made based on the reconnection count. When the reconnection count is greater than the reconnection count threshold, it is determined that the chips corresponding to the chip reconnection number cannot be successfully reconnected after multiple attempts, and the chip reconnection number needs to be adjusted before reconnection is performed again. When the reconnection count is less than or equal to the reconnection count threshold, it is determined that there are still remaining attempts and communication connection is performed based on a current chip reconnection number.

It should be understood that the preset decrementing strategy refers to a preset method for adjusting the chip reconnection number. After the preset reconnection attempts for the current chip reconnection number are used up, the chip reconnection number is usually decreased. For example, the chip reconnection number is decreased by 1, and reconnection of the front-end sampling chips is attempted using the new chip reconnection number. Before performing reconnection of the front-end sampling chips with the new chip reconnection number, the reconnection count needs to be reset to zero, so that multiple connection attempts can be made using the new chip reconnection number.

Further, after acquiring the communication connection time of the front-end sampling chips, the method further includes: when the communication connection time is less than the preset holding time, determining that the daisy chain enters an error state; determining the chip reconnection number based on the connection number; and returning to the step of reconnecting the front-end sampling chips based on the chip reconnection number.

It should be noted that when the communication connection time is less than the preset holding time, it indicates that the daisy chain cannot maintain a normal communication connection (the daisy chain may be in an unstable state), and enters the error state. In this case, the connection number of the chips is directly used as the chip reconnection number, and Step S302 is performed to reconnect the front-end sampling chips.

It can be understood that if the breakpoint changes, front-end sampling chips that can be successfully connected in the daisy chain can be determined according to the current chip reconnection number when reconnection succeeds, to determine a current breakpoint.

In this embodiment, the communication connection time of the front-end sampling chips is acquired. When the communication connection time is greater than or equal to the preset holding time, the reconnection count is initialized, the chip reconnection number is updated to the chip number, and the front-end sampling chips are reconnected based on the chip reconnection number, while updating the reconnection count. When the front-end sampling chips fail to be reconnected, it is determined that the daisy chain enters the failure state. When the reconnection count is less than or equal to the reconnection count threshold, the process returns to the step of reconnecting the front-end sampling chips based on the chip reconnection number. When the reconnection count is greater than the reconnection count threshold, the chip reconnection number is updated based on the preset decrementing strategy, and the process returns to the step of reconnecting the front-end sampling chips based on the chip reconnection number. When a breakpoint occurs in the daisy chain, the front-end sampling chips are rapidly reconnected in this embodiment to quickly restore the daisy chain. After the daisy chain is restored, all data is acquired, allowing the vehicle to automatically resume normal operation. During the reconnection, multiple attempts for each individual chip are made to enhance the efficiency of reconnection and ensure the rapid recovery of the daisy chain.

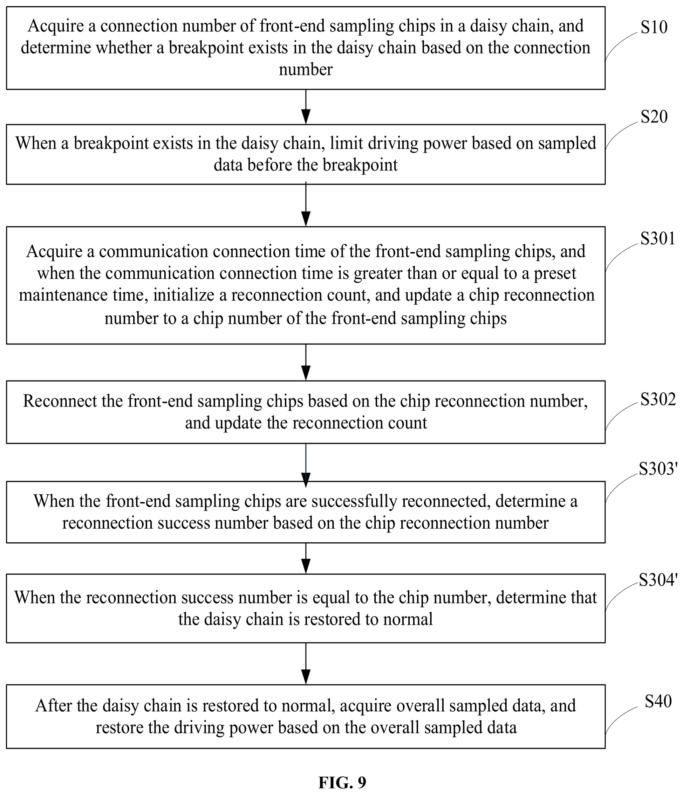

FIG. 9 is a schematic flowchart of a third embodiment of a daisy chain breakpoint recovery method according to the present application.

Based on the foregoing embodiments, after Step S302, the method further includes:
Step S303': When the front-end sampling chips are successfully reconnected, determine a reconnection success number based on the chip reconnection number.

It should be noted that the reconnection success number refers to the number of front-end sampling chips that are successfully connected to the MCU during reconnection. When the front-end sampling chips are successfully reconnected, the reconnection success number equals the chip reconnection number.

Step S304': When the reconnection success number is equal to the chip number, determine that the daisy chain is restored to normal.

It can be understood that when the reconnection success number is equal to the chip number, it indicates that all front-end sampling chips in the daisy chain have successfully established communication connection with the MCU. In this case, it can be determined that the daisy chain is restored to normal, and no breakpoint exists in the daisy chain.

Further, when the reconnection success number is less than the chip number, the process returns to the step of acquiring a connection number of front-end sampling chips in the daisy chain.

It should be understood that when the reconnection success number is less than the chip number, it indicates that some front-end sampling chips in the daisy chain have not yet successfully connected to the MCU. In this case, a breakpoint still exists in the daisy chain, and it cannot be determined that the daisy chain is restored to normal. The process returns to Step S10 to redetermine a breakpoint and perform reconnection again.

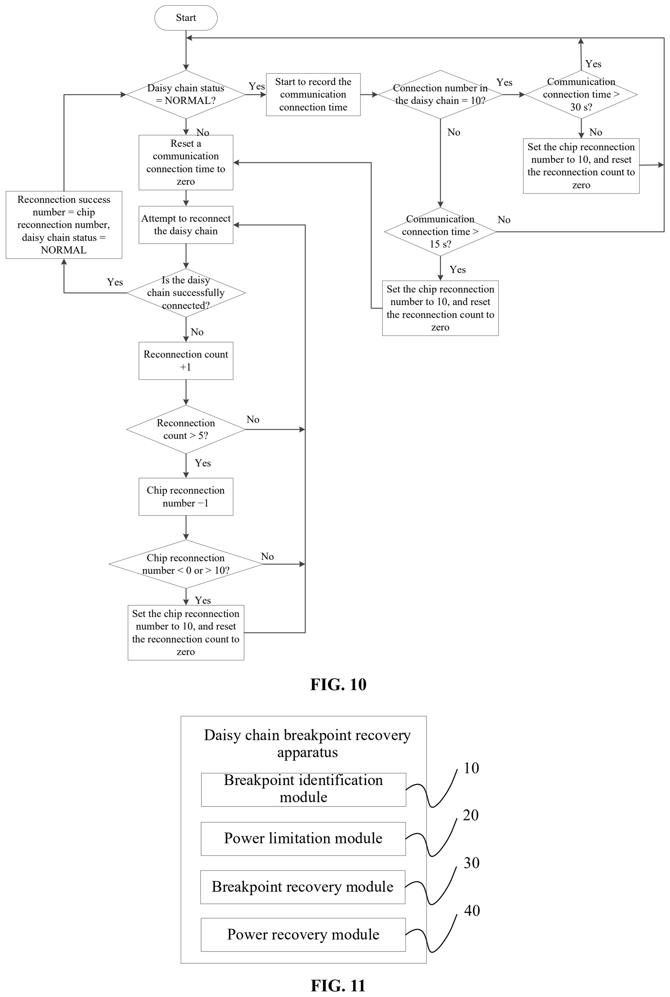

As shown in the overall schematic flowchart FIG. 10, it is assumed that the daisy chain includes ten front-end sampling chips. If the daisy chain operates in the normal state with all ten chips connected and the normal state is maintained for over 30 s, the daisy chain is considered to be in a steady state. In this case, a reconnection counter is cleared, and the chip reconnection number is set to 10. If the daisy chain operates in the normal state but fewer than ten chips are connected in the daisy chain, a breakpoint can be identified based on the number of connected chips. If this state lasts over 15 s, the daisy chain restarts reconnection, beginning with a chip reconnection number of 10. If the daisy chain enters the error state within 15 s, the chip reconnection number is decremented to perform reconnection. If the daisy chain enters the error state and the number of chips connected in the previous connection was 10, the daisy chain will then attempt reconnection sequentially in the order of 10-9-8-7-6-5-4-3-2-1 chips. For each reconnection attempt with a given number of chips, the method will perform reconnection up to five times.

In this embodiment, the communication connection time of the front-end sampling chips is acquired. When the communication connection time is greater than or equal to the preset holding time, the reconnection count is initialized, and the chip reconnection number is updated to the chip number, and the front-end sampling chips are reconnected based on the chip reconnection number. When the front-end sampling chips are successfully reconnected, the reconnection success number is determined based on the chip reconnection number. When the reconnection success number is equal to the chip number, it is determined that the daisy chain is restored to normal. When a breakpoint occurs in the daisy chain, the front-end sampling chips are rapidly reconnected in this embodiment to quickly restore the daisy chain. After the daisy chain is restored, all data is acquired, allowing the vehicle to automatically resume normal operation.

In addition, embodiments of the present application further provide a storage medium, where the storage medium has a daisy chain breakpoint recovery program stored therein, and the daisy chain breakpoint recovery program implements, when executed by a processor, the steps of the daisy chain breakpoint recovery method described above.

FIG. 11 is a structural block diagram of the first embodiment of the daisy chain breakpoint recovery apparatus according to the present application.

As shown in FIG. 11, the daisy chain breakpoint recovery apparatus provided in the embodiments of the present application include:
a breakpoint identification module 10, configured to acquire a connection number of front-end sampling chips in a daisy chain, and determine, based on the connection number, whether a breakpoint exists in the daisy chain;
a power limitation module 20, configured to: when a breakpoint exists in the daisy chain, limit a driving power based on sampled data before the breakpoint;
a breakpoint recovery module 30, configured to reconnect the front-end sampling chips in the daisy chain to restore the daisy chain to normal operation; and
a power recovery module 40, configured to: after the daisy chain is restored to normal, acquire overall sampled data, and resume the driving power based on the overall sampled data.

In this embodiment, the communication connection time of the front-end sampling chips is acquired, and when the communication connection time is greater than or equal to the preset holding time, the reconnection count is initialized, and the chip reconnection number is updated to the chip number of the front-end sampling chips. A daisy chain cannot form a serial loop under strong interference, making it impossible to acquire cell data to identify breakpoints, thereby increasing safety risks. In this embodiment, when daisy chain interference or disconnection occurs during vehicle operation, a position of a breakpoint can be accurately determined, the difficulty of battery pack maintenance is reduced, and data before the breakpoint is acquired to enable the vehicle to operate with a limited power, so that the vehicle does not need to stop driving at a high voltage, thereby ensuring driving safety and mitigating safety risks. In addition, the daisy chain is restored through a fast reconnection mechanism, complete data is acquired after restoration, and the vehicle can automatically restore normal operation.

In an embodiment, the breakpoint recovery module 30 is further configured to acquire a communication connection time of the front-end sampling chips, and when the communication connection time is greater than or equal to a preset holding time, initialize a reconnection count, and update a chip reconnection number to a chip number of the front-end sampling chips;
reconnect the front-end sampling chips based on the chip reconnection number, and update the reconnection count;
when the front-end sampling chips fail to be reconnected, determine that the daisy chain enters a failure state;
when the reconnection count is less than or equal to a reconnection count threshold, return to perform the step of reconnecting the front-end sampling chips based on the chip reconnection number; and
when the reconnection count is greater than the reconnection count threshold, update the chip reconnection number based on a preset decrementing strategy, initialize the reconnection count, and return to perform the step of reconnecting the front-end sampling chips based on the chip reconnection number.

In an embodiment, the breakpoint recovery module 30 is further configured to determine target front-end sampling chips from the front-end sampling chips based on the chip reconnection number;
reconnect the target front-end sampling chips;
acquire a communication verification state of the target front-end sampling chips, and update a verification error count based on the communication verification state;
when the verification error count is less than or equal to a preset verification threshold, determine that the front-end sampling chips are successfully reconnected; and
when the verification error count is greater than the preset verification threshold, determine that the front-end sampling chips fail to be reconnected.

In an embodiment, the breakpoint recovery module 30 is further configured to: when the front-end sampling chips are successfully reconnected, determine a reconnection success number based on the chip reconnection number;
when the reconnection success number is equal to the chip number, determine that the daisy chain is restored to normal; and
when the reconnection success number is less than the chip number, return to perform the step of acquiring a connection number of front-end sampling chips in a daisy chain.

In an embodiment, the breakpoint recovery module 30 is further configured to: when the communication connection time is less than the preset holding time, determine that the daisy chain enters an error state;
determine the chip reconnection number based on the connection number; and
return to perform the step of reconnecting the front-end sampling chips based on the chip reconnection number.

In an embodiment, the breakpoint recovery module 30 is further configured to: when the connection number is not equal to the chip number of the front-end sampling chips, determine whether a breakpoint exists in the daisy chain; and
when the connection number is equal to the chip number, acquire the communication connection time, when the communication connection time is greater than a preset stabilization time, determine that no breakpoint exists in the daisy chain, initialize the reconnection count, update the chip reconnection number to the chip number, and return to perform the step of acquiring a connection number of front-end sampling chips in a daisy chain.

In an embodiment, the breakpoint identification module 10 is further configured to: when a breakpoint exists in the daisy chain, determine a position of the breakpoint in the daisy chain based on the connection number.

It should be understood that the foregoing descriptions are merely for illustrative purposes and do not constitute any limitation to the technical solutions of the present application. In specific applications, those skilled in the art may make configurations as required, and this is not limited in the present application.

It should be noted that the workflow described above is schematic only and does not limit the scope of protection of the present application. In actual applications, those skilled in the art may selectively implement some or all of the steps to achieve the objectives of this embodiment according to actual requirements, with no limitations imposed hereby.

Furthermore, for technical details not exhaustively described in this embodiment, reference may be made to the daisy chain breakpoint recovery method provided in any embodiment of the present application. Details are not described herein again.

In addition, it needs to be noted that, the terms "include", "comprise" or any variants thereof herein are intended to cover non-exclusive inclusion, such that a process, a method, a commodity or a system comprising a series of elements comprise not only those elements, but also other elements not listed explicitly, or elements inherent to this process, method, commodity or system. An element defined by a statement "comprising one" do not preclude the presence of another identical element in the process, method, commodity or system comprising this element, without more limitations.

The above sequence numbers of the examples of the present application are only for description, and do not represent advantages and disadvantages of the examples.

Based on the description of the implementations, persons skilled in the art may clearly understand that the methods in the embodiments can be implemented by using software plus a necessary universal hardware platform, and certainly can be implemented by hardware, the former being the preferred implementations in many cases. Based on such an understanding, the technical solutions of the present application essentially, or the part contributing to the related art can be implemented in the form of a software product. The computer software product can be stored in a storage medium (for example, a read-only memory (ROM)/RAM, a magnetic disk or an optical disc), and includes several instructions for instructing a terminal device (which can be a mobile phone, a computer, a server, or a network device) to perform the methods in various embodiments of the present application.

The above are only preferred embodiments of the present application and is not intended to limit the scope of the patent of the present application. Any equivalent structure or equivalent procedure transformation using the content of the specification of the present application and the accompanying drawings, or any direct or indirect application in other related technical fields, similarly falls within the scope of protection of the patent of the present application.

## Claims

1. A daisy chain breakpoint recovery method, comprising:
acquiring a connection number of front-end sampling chips in a daisy chain, and determining whether a breakpoint exists in the daisy chain based on the connection number;
when a breakpoint exists in the daisy chain, limiting a driving power based on sampled data before the breakpoint;
reconnecting the front-end sampling chips in the daisy chain to restore the daisy chain to normal; and
after the daisy chain is restored to normal, acquiring overall sampled data, and resuming the driving power based on the overall sampled data.

2. The method according to claim 1, wherein reconnecting the front-end sampling chips in the daisy chain to restore the daisy chain to normal comprises:
acquiring a communication connection time of the front-end sampling chips, and when the communication connection time is greater than or equal to a preset holding time, initializing a reconnection count and updating a chip reconnection number to a chip number of the front-end sampling chips;
reconnecting the front-end sampling chips based on the chip reconnection number, and updating the reconnection count;
when the front-end sampling chips fail to be reconnected, determining that the daisy chain enters a failure state;
when the reconnection count is less than or equal to a reconnection count threshold, returning to the step of reconnecting the front-end sampling chips based on the chip reconnection number; and
when the reconnection count is greater than the reconnection count threshold, updating the chip reconnection number based on a preset decrementing strategy, initializing the reconnection count, and returning to the step of reconnecting the front-end sampling chips based on the chip reconnection number.

3. The method according to claim 2, wherein reconnecting the front-end sampling chips based on the chip reconnection number comprises:
determining target front-end sampling chips from the front-end sampling chips based on the chip reconnection number;
reconnecting the target front-end sampling chips;
acquiring a communication verification state of the target front-end sampling chips, and updating a verification error count based on the communication verification state;
when the verification error count is less than or equal to a preset verification threshold, determining that the front-end sampling chips are successfully reconnected; and
when the verification error count is greater than the preset verification threshold, determining that the front-end sampling chips fail to be reconnected.

4. The method according to claim 2 or 3, wherein after reconnecting the front-end sampling chips based on the chip reconnection number, the method further comprises:
when the front-end sampling chips are successfully reconnected, determining a reconnection success number based on the chip reconnection number;
when the reconnection success number is equal to the chip number, determining that the daisy chain is restored to normal; and
when the reconnection success number is less than the chip number, returning to the step of acquiring a connection number of front-end sampling chips in a daisy chain.

5. The method according to any one of claims 2 to 4, wherein after acquiring the communication connection time of the front-end sampling chips, the method further comprises:
when the communication connection time is less than the preset holding time, determining that the daisy chain enters an error state;
determining the chip reconnection number based on the connection number; and
returning to the step of reconnecting the front-end sampling chips based on the chip reconnection number.

6. The method according to any one of claims 1 to 5, wherein determining whether a breakpoint exists in the daisy chain based on the connection number comprises:
when the connection number is not equal to the chip number of the front-end sampling chips, determining whether a breakpoint exists in the daisy chain; and
when the connection number is equal to the chip number, acquiring a communication connection time, and when the communication connection time is greater than a preset stabilization time, determining that no breakpoint exists in the daisy chain, initializing the reconnection count, updating the chip reconnection number to the chip number, and returning to the step of acquiring a connection number of front-end sampling chips in the daisy chain.

7. The method according to any one of claims 1 to 6, further comprising:
when a breakpoint exists in the daisy chain, determining a position of the breakpoint in the daisy chain based on the connection number.

8. A daisy chain breakpoint recovery apparatus, comprising:
a breakpoint identification module, configured to acquire a connection number of front-end sampling chips in a daisy chain, and determine whether a breakpoint exists in the daisy chain based on the connection number;
a power limitation module, configured to, when a breakpoint exists in the daisy chain, limit a driving power based on sampled data before the breakpoint;
a breakpoint recovery module, configured to reconnect the front-end sampling chips in the daisy chain to restore the daisy chain to normal; and
a power recovery module, configured to, after the daisy chain is restored to normal, acquire overall sampled data and resume the driving power based on the overall sampled data.

9. A daisy chain breakpoint recovery device, comprising: a memory, a processor, and a daisy chain breakpoint recovery program stored in the memory and executable on the processor, the daisy chain breakpoint recovery program configured to implement the steps of the daisy chain breakpoint recovery method according to any one of claims 1 to 7.

10. A storage medium, having stored thereon a daisy chain breakpoint recovery program which, when executed by a processor, implements the steps of the daisy chain breakpoint recovery method according to any one of claims 1 to 7.
